# EUROPÄISCHE PATENTANMELDUNG

(11) **EP 1 063 707 A2**
(43) Veröffentlichungstag der Anmeldung: **27.12.2000**
(21) Anmeldenummer: 00113419.6
(22) Anmeldetag: 23.06.2000
(51) Int. Cl.: H01L 31/042, F24J 2/54

(54) **Solarzellenanordnung**

(30) Priorität: 24.06.1999 DE 19928857
(71) Anmelder: Lieber, Otto, Ing., 32312 Lübbecke/Westf. (DE)
(72) Erfinder: Lieber, Otto, Ing., 32312 Lübbecke/Westf. (DE)
(74) Vertreter: Busse & Busse Patentanwälte

(57) **Zusammenfassung**

Die Erfindung bezieht sich auf eine Solarzellenanordnung mit einem Gestell zur Halterung von Solarzellengeräten, insbesondere von Photovoltaikplatten (1.3.). Die Solarzellenanordnung hat ein Gestell, daß eine um eine horizontale Achse (1.2) verschwekbaren und um eine vertikale Achse (1.1.) drehbaren Mast aufweist. Der Mast (1) ist mit den an diesem abgestützten Solarzellengeräten einer gewählten Dreh- und/oder Schwenkpositionierung arretierbar.

## Beschreibung

Die Erfindung bezieht sich auf eine Solarzellenanordnung in einer Ausbildung nach dem Oberbegriff des Patentanspruchs 1.

Solarzellenanordnungen herkömmlicher Bauart sind insbesondere auf Dächern oder Fassaden angeordnete Teile, z.B. Photovoltaikplatten, die in gewählter aber fester Ausrichtung auf einen bestimmten Sonnenwinkel einjustiert sind. Damit ist der zu erreichende Wirkungsgrad beeinträchtigt, da die bekannten Solarzellenanordnungen aufgrund der unterschiedlichen Sonnenstände unter Einschluß des Sonnenwinkels und der Sonnenhöhe in ihrer festgelegten Justierung zu einem großen Teil ihrer Betriebszeit jeweils nicht optimal den Gegebenheiten angepaßt sind.

Es ist Aufgabe der vorliegenden Erfindung, eine Solarzellenanordnung der eingangs genannten Art zu schaffen, mit der die Sonnenenergie optimierter umgesetzt werden kann.

Zur Lösung dieser Aufgabe zeichnet sich die Solarzellenanordnung durch die im Patentanspruch 1 angegebenen Merkmale aus. Hinsichtlich weiterer vorteilhafter Ausgestaltungen wird auf die Ansprüche 2 bis 7 verwiesen.

Bei der Solarzellenanordnung nach der Erfindung lassen sich die Solarzellengeräte, vorzugsweise Photovoltaikplatten jeweils optimal dem entsprechenden Sonnenwinkel bzw. der Sonnenhöhe durch Verschwenken und/oder Drehen des Mastes und damit der Solarzellengeräte anpassen. Dies kann auf automatischem Wege durch eine geeignete Steuerung geschehen. Die vorgesehen Solarzellengerätefläche ist daher so anzuordnen, daß sie von Sonnenaufgang bis Sonnenuntergang und jahreszeitenabhängig direkt gegen die Sonne gerichtet sind.

Der Mast kann eine Schwenk- bzw. Kippbewegung um eine horizontale Achse und eine Drehbewegung um eine vertikale Achse durchführen, wozu vorzugsweise zwei separate elektrische Antriebe vorgesehen sind, die mit einer automatischen elektrischen Steuerung so angetrieben werden, daß z.B. die Photovoltaikplatten entsprechend der Sonnenrichtung und der Sonnenhöhe automatisch optimal eingestellt sind.

Die elektrischen Antriebe können entweder stufenlos oder in sehr kurzen Zeittakten von z.B. einem Takt pro Minute der Sonnenposition entsprechend eingestellt werden.

Die Solarzellenanordnung zeichnet sich durch eine optimale Nutzung aus und kann gegenüber herkömmlichen Solarzellengeräten z.B. die erreichbare Stromleistung verdoppeln. Der mit den vorgesehenen Geräten zur Verdrehung, Verschwenkung und Arretierung einhergehende Aufwand ist relativ gering. Auch der Wartungsaufwand ist gering. Die elektrische Steuerung kann in der Winter- und Sommerzeit veränderliche Sonnenauf- und Sonnenuntergänge berücksichtigen.

Sind z.B. Photovoltaikplatten zu reinigen oder auszutauschen, kann der Mast vollständig gelegt werden, so daß mit geringem Aufwand eine entsprechende Reparatur bzw. ein Austausch und Reinigungsarbeiten durchgeführt werden können.

Der Mast besteht bevorzugtermaßen aus Aluminium. Aus Aluminium können auch Gestellteile zut Aufnahme der Solarzellengeräte sein. Zweckmäßigerweise hat die Solarzellenanordnung ein Festteil, das z.B. in einem Fundament verankert werden kann. Dieses Festteil kann aus feuerverzinktem Schwerstahl hergestellt sein. Alle elektrischen Antriebe sind zweckmäßigerweise regenwassergeschützt angeordnet.

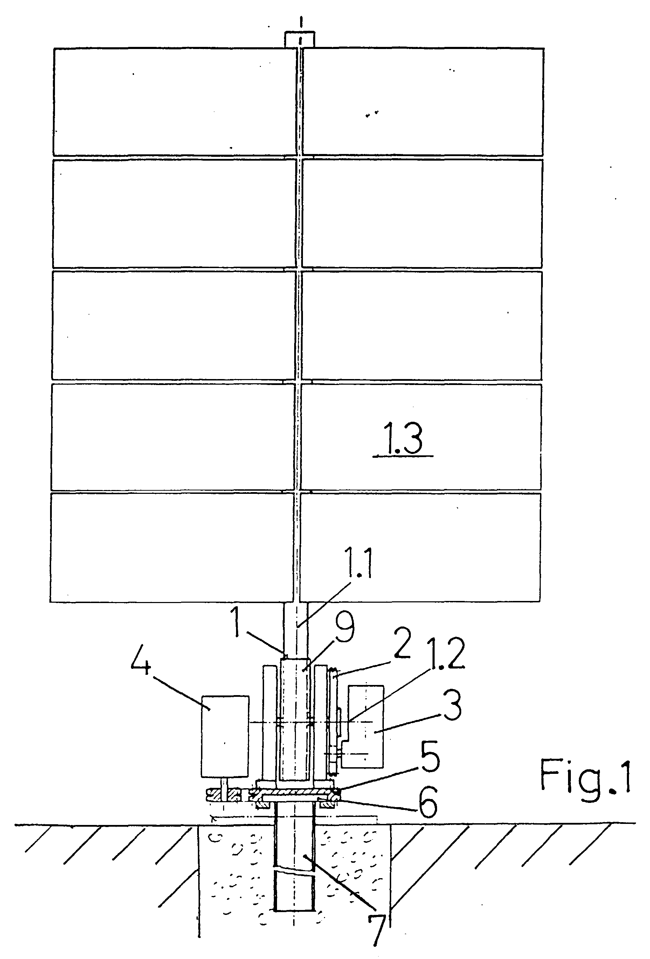

Zur weiteren Erläuterung der Erfindung wird auf die nachfolgende Beschreibung und die Zeichnung verwiesen.

In der Zeichnung ist ein schematisches Ausführungsbeispiel dargestellt. Die in der Zeichnung allgemein schematisch dargestellte Solarzellenanordnung hat ein Gestell mit einem Mast 1, der um eine vertikale Achse 1.1 drehbar und um eine horizontale Achse 1.2 verschwenkt bzw. gedreht gekippt werden kann. Zum Verschwenken bzw. Kippen sind die Antriebselemente 2 und 3 eines elektrischen Antriebs vorgesehen, der entweder stufenlos oder in sehr kurzen Taktzeiten die Verschwenkung des Mastes 1 und der daran befestigten Photovoltaikplatten 1.3 durchführt.

Abgestützt ist der Mast 1 an einer festen Drehfläche 6 die ihrerseits an einem Festteil 7 angeordnet ist, welches in ein Betonfundament eingelassen ist. Dieses Festteil 7 bzw. diese Festfläche ist umgriffen von einer Drehscheibe 5, an der ein Mastschuh 9 aus feuerverzinktem Stahl mit einer Mastschuh-Basis 10 befestigt ist. Die Verdrehung um die Vertikal-achse 1.1 erfolgt über einen elektrischen Antrieb 4, der eine Steuerung aufweist, um die entsprechenden Drehwinkel in Abhängigkeit des Sonnenwinkels optimal einstellen zu können. Die Arretierung des Mastes 1 in der jeweiligen Positionierung (Dreh- und Kipp) erfolgt über die Antriebe 3,4. Der für die sonnenhöheneinstellung hauptsächlich verantwortliche Bewegungsmotor 3 und der für die Einstellung der Sonnenrichtung maßgebliche Bewegungsmotor 4 haben nur einen sehr geringen Energiebedarf.

Die Bewegung des Mastes 1 auf der-Grundplatte 6 ist dauerfettgeschmiert und braucht für die Zeit von zwei Jahren nicht nachgeschmiert zu werden. Die Nachschmierung erfolgt einfach durch zwei Fettbuchsen, die auf der Drehscheibe bzw. Drehplatte 5 vorgesehen sind.

## Patentansprüche

1. Solarzellenanordnung mit einem Gestell zur Halterung von Solarzellengeräten, insbesondere von Photovoltaikplatten (1.3), dadurch gekennzeichnet, daß das Gestell einen um eine horizontale Achse (1.2) verschwenkbaren und um eine vertikale Achse (1.1) drehbaren Mast (1) aufweist und der Mast (1) mit den an diesem abgestützten Solarzellengeräten in einer gewählten Dreh- und/oder Schwenkpositionierung arretierbar ist.

2. Solarzellenanordnung nach Anspruch 1, dadurch gekennzeichnet, daß der Mast (1) über einen elektrischen Antrieb (3) stufenlos oder getaktet verschwenkbar ist.

3. Solarzellenanordnung nach Anspruch 1 oder 2, dadurch gekennzeichnet, daß der Mast (1) auf einer ortsfesten Drehfläche (6) axial verdrehbar angeordnet ist.

4. Solarzellenanordnung nach Anspruch 3, dadurch gekennzeichnet, daß die ortsfeste Drehfläche (6) über eine Drehantriebsplatte (5) mit einem Mastschuh (9) drehbar ist.

5. Solarzellenanordnung nach einem der Ansprüche 1 bis 4, dadurch gekennzeichnet, daß die Drehbewegung des Mastes (1) über einen elektromotorischen Antrieb (4) erfolgt.

6. Solarzellenanordnung nach Anspruch 5, dadurch gekennzeichnet, daß der elektromotorische Antrieb (4) zur Verdrehung des Mastes (1) stufenlos oder getaktet den Mast (1) antreibt.

7. Solarzellenanordnung nach einem der vorhergehenden Ansprüche, dadurch gekennzeichnet, daß der Mast (1) in einem Mastschuh (9) befestigbar ist, der seinerseits in einer Halterung (10) an einem Antriebsteller (5) abstützbar ist.
